## Europäisches Patentamt

## European Patent Office

## Office européen des brevets

(19)

(11) Veröffentlichungsnummer: **0 249 845**
**B1**

(12) ## EUROPÄISCHE PATENTSCHRIFT

(45) Veröffentlichungstag der Patentschrift:
28.11.90

(51) Int. Cl.⁵: **B23Q 1/00**

(21) Anmeldenummer: 87108251.7

(22) Anmeldetag: 06.06.87

(54) Werkzeugmaschine.

(30) Priorität: 14.06.86 DE 3620086

(43) Veröffentlichungstag der Anmeldung:
23.12.87 Patentblatt 87/52

(45) Bekanntmachung des Hinweises auf die Patenterteilung:
28.11.90 Patentblatt 90/48

(84) Benannte Vertragsstaaten:
CH DE ES FR GB IT LI SE

(56) Entgegenhaltungen:
DE-A- 2 405 024
FR-A- 1 454 405
GB-A- 2 040 244
JP-A-57 127 637
US-A- 2 107 578
US-A- 2 355 082
US-A- 2 668 557
US-A- 3 241 454
US-A- 3 797 081

(73) Patentinhaber: Chiron-Werke GmbH & Co. KG,
Talstrasse 33, D-7200 Tuttlingen(DE)

(72) Erfinder: Rütschle, Eugen, Schönenbergstrasse 20,
D-7202 Mühlheim(DE)
Erfinder: Winkler, Hans-Henning, Dr.,
Brunnentalstrasse 88, D-7200 Tuttlingen(DE)

(74) Vertreter: Witte, Alexander, Dr.-Ing., Witte, Weller &
Hilgenfeldt Patent- und Rechtsanwälte
Augustenstrasse 7, D-7000 Stuttgart 1(DE)

ACTORUM AG

## Beschreibung

Die Erfindung betrifft eine Werkzeugmaschine mit einem in mehreren Koordinatenachsen verfahrbaren Spindelstock, mit einem Werkstücktisch, der um eine zu seiner Oberfläche senkrechte Achse derart abwechselnd gegenläufig um einen Winkel von 180° verdrehbar ist, daß jeweils eine Hälfte der Oberfläche des Werkstücktisches abwechselnd eine Bearbeitungsseite im Arbeitsbereich des Spindelstocks und eine Bestückungsseite im Abstand vom Arbeitsbereich des Spindelstocks bildet, wobei mindestens eine Leitung für Signale und/oder Energie von einem raumfesten Teil der Werzeugmaschine zum Werkstücktisch geführt ist.

Eine derartige Werkzeugmaschine ist aus dem DE-U 8 316 776 bekannt.

Bei Werkzeugmaschinen ist es bekannt, nicht nur den das Bearbeitungswerkzeug tragenden Teil der Maschine, beispielsweise den Spindelstock, verfahrbar zu gestalten, es ist darüber hinaus auch bekannt, den das Werkstück tragenden Tisch in einer linearen oder einer Drehbewegung zu verfahren. Diese Bewegung des Tisches kann einmal dazu dienen, um das Werkstück zum Bearbeiten an einem ortsfesten Werkzeug entlang zu führen. Bei numerisch gesteuerten Werkzeugmaschinen werden Drehtische jedoch auch dazu verwendet, um während der Bearbeitung eines Werkstückes auf der einen Seite des Drehtisches bereits das nächste Werkstück auf der anderen Seite montieren zu können, so daß durch Verdrehen des Tisches um beispielsweise 180° die Bearbeitung des neuen Werkstückes unmittelbar nach Beendigung der Bearbeitung des alten Werkstückes aufgenommen werden kann. Das bearbeitete Werkstück kann dann, während das neue Werkstück bearbeitet wird, abgenommen werden und an seiner Stelle wird dann ein neues, noch unbearbeitetes Werkstück montiert. Diese Konfiguration eines Drehtisches hat neben einer sehr hohen Ausnutzung der Maschinenarbeitszeit noch den Vorteil, daß die Anfahrgenauigkeit vom Werkstück zum Werkzeug besonders hoch ist, weil die einfache Drehbewegung um beispielsweise 180° präzise und einfach ausgeführt werden kann.

Will man Werkstücke auf einem Drehtisch der vorstehend beschriebenen Art bearbeiten, so ist es mitunter erforderlich, vom raumfesten Teil der Werkzeugmaschine Verbindungen zum Drehtisch herzustellen. Diese Verbindungen können dazu dienen, um Energie in Gestalt von Druckluft oder Hydraulikflüssigkeit von der Werkzeugmaschine zum Drehtisch zu fördern oder Signale zwischen der Werkzeugmaschine und dem Werkstücktisch auszutauschen. Typischerweise ist dies der Fall, wenn das Werkstück auf dem Werkstücktisch mittels einer fremdkraftbetätigten Spannvorrichtung oder eines Teilapparates gehalten wird. Zum Betätigen der Spannvorrichtung und des Teilapparates sind Energien erforderlich, die z.B. in Form von elektrischem Strom, Preßluft oder Hydraulikflüssigkeit zugeführt werden können. Außerdem können Steuersignale zum gezielten Betätigen dieser Vorrichtungen auf den Werkstücktisch übertragen werden, ebenso wie Signale von Endschaltern, Sensoren und dergleichen, die an den Vorrichtungen angeordnet sind, vom Werkstücktisch wieder zurück zur Werkzeugmaschine übertragen werden können. Schließlich können dazu diese Verbindungsleitungen beispielsweise dazu verwendet werden, um im Inneren der Vorrichtungen auf dem Werkstücktisch einen Überdruck zu erzeugen, der das Eindringen von Schmutz, Bohröl, Spänen und dergleichen verhindert. Schließlich können diese Leitungen auch zum Zuführen von Bohrwasser verwendet werden, mit dem das gerade in Bearbeitung befindliche Werkstück gekühlt wird.

Aus dem eingangs genannten DE-U 8 316 776 ist es bekannt, eine Verbindung zwischen dem raumfesten Teil der Werkzeugmaschine und dem Drehtisch dadurch herzustellen, daß konzentrisch zur Drehachse des Drehtisches durch diesen hindurch mindestens eine elektrische Leitung und/oder Fluidleitung von der Unterseite des Tisches her zur Oberseite geführt ist. Im Zentrum des Drehtisches ist eine geeignete, mit dem Tisch verdrehbare Kupplung angeordnet. Innerhalb des Tisches ist ein flexibles Leitungsstück innerhalb eines Kastens derart angeordnet, daß das Leitungsstück eine begrenzte Drehbewegung von 180° des Drehtisches erlaubt. Ein Ende des Leitungsstückes ist mit der zentralen Kupplung verbunden und das andere Ende des Leitungsstückes ist beispielsweise durch ein raumfestes zentrales Rohr nach unten aus dem Drehtisch herausgeführt.

Es hat sich jedoch in der Praxis gezeigt, daß die bekannte Werkzeugmaschine nicht den Anforderungen aller Anwendungsfälle genügt, insbesondere erfordert das begrenzt verdrehbare Leitungsstück einen beträchtlichen Raum im Werkstücktisch, die herzustellenden Verbindungen sind einigermaßen kompliziert und können daher bei extremer Beanspruchung Quelle von Störungen sein. Außerdem ist die bekannte Anordnung umso komplizierter und aufwendiger, je mehr Leitungen zum Werkstücktisch geführt werden müssen.

Aus der US-A 3 797 081 ist eine Werkzeugmaschine bekannt, bei der von einer Decke einer Maschinenverkleidung Versorgungskabel nach unten hängen und zu Maschinenaggregaten führen, die jedoch raumfest sind.

Aus der DE-B 1 107 310 ist noch eine Leitungszuführung an Werkzeugmaschinen bekannt. Die bekannte Werkzeugmaschine ist eine Langbett-Fräsmaschine, die mit einem portalartigen Rahmen versehen ist, der axial oberhalb eines raumfesten langgestreckten Werkstücktischs verfahrbar ist. Das Portal trägt zwei senkrecht zur axialen Richtung sowie vertikal verfahrbare Fräsköpfe. Außerdem ist das Portal mit einem Taster versehen, der bei der axialen Bewegung Steuermarken unterhalb des Werkstücktischs abtastet. Über Leitungsverbindungen vom axial verfahrbaren Portal zu einem raumfesten Punkt der Werkzeugmaschine ist in dieser Druckschrift nichts ausgesagt. Die Leitungsführung innerhalb des Portals zur Versorgung der Fräsköpfe ist jedoch im einzelnen dargestellt. Diese Leitungsführung ist so ausgebildet, daß mittels geeigneter Spannrollen sämtliche Leitungen stets unter Spannung gehalten werden und daher ein Durchhängen der Leitungen in einem kastenförmigen Oberteil des Portals vermieden wird. Von einem seitlichen Punkt des Portals, das mit den Fräsköpfen in der Höhe verfahrbar ist, sind mehrere Leitungen zu dem in der Höhe nicht verfahrbaren Taster geführt. Hierzu hängen von einer Übertragungsplatte des Portals mehrere Leitungen bogenförmig nach unten und sind nach oben wieder zu einem Körper des Tasters geführt, um die geringfügige vertikale Relativbewegung von Übertragungsplatte und Taster auszugleichen. Eine axiale Relativbewegung der Übertragungsplatte zum Taster in einer Horizontalebene ist nicht vorgesehen. Auch befindet sich diese Leitungsverbindung in einem Teil der Werkzeugmaschine, nämlich unterhalb des Werkstücktischs, in dem sie weder mit dem Bewegungsbereich der Fräsköpfe noch mit dem Arbeitsbereich eines Benutzers der Werkzeugmaschine in Kollision zu geraten droht, wenn sich die Fräsköpfe in ihren drei kartesischen Bewegungsachsen oberhalb des Werkstücktischs bewegen oder wenn der Benutzer Werkstücke auf den Werkstücktisch aufspannt oder von diesem wieder demontiert.

Der Erfindung liegt demgegenüber die Aufgabe zugrunde, eine Werkzeugmaschine der eingangs genannten Art dahingehend weiterzubilden, daß mit möglichst einfachen Mitteln eine eine Drehbewegung des Tisches erlaubende Leitungsverbindung hergestellt werden kann, die auch das Vorsehen einer Vielzahl von elektrischen Leitungen oder Fluidleitungen gestattet, im übrigen aber die Arbeitsfunktion der Werkzeugmaschine nicht beeinträchtigt.

Diese Aufgabe wird erfindungsgemäß dadurch gelöst, daß bei einer Werkzeugmaschine der eingangs genannten Art die Leitung oberhalb des Werkstücktisches an einem Befestigungspunkt an dem raumfesten Teil der Werkzeugmaschine angeschlossen und lose nach unten hängend mit einem Anschlußkasten des Werkstücktisches verbunden ist, wobei der Befestigungspunkt und der Anschlußkasten gegenüber der Achse beabstandet und gegeneinander um etwa einen rechten Winkel versetzt angeordnet sind, wenn der Anschlußkasten seine Winkelendlage einnimmt.

Die der Erfindung zugrundeliegende Aufgabe wird hierdurch vollkommen gelöst, weil die lose nach unten hängenden Leitungen an beiden Enden mit handelsüblichen Anschlußstücken angeschlossen werden können, die überdies leicht zugänglich sind. Dadurch, daß die Leitungen oben in der Nähe der Drehachse des Werkstücktisches angeschlossen sind, ergibt sich eine symmetrische und die Leitungen nur minimal mechanisch verformende Bewegung, wenn der Werkstücktisch jeweils um 180° hin- und hergedreht wird.

Eine bevorzugte Ausführungsform der Erfindung zeichnet sich dadurch aus, daß der Anschlußkasten auf der Trennlinie zwischen Bearbeitungsseite und Bestückungsseite angeordnet ist und beim Verdrehen entlang einer Bewegungsbahn etwa in Form eines zum Spindelstock geöffneten Halbkreises geführt ist.

Diese Maßnahme, hat neben einer noch vollkommeneren Symmetrierung der Bewegungsvorgänge den Vorteil, daß der Anschlußkasten durch seine jeweils genau seitliche Anordnung weder dem Spindelstock auf der Bearbeitungsseite noch dem Benutzer, der auf der Bestückungsseite das Werkstück auswechselt, im Wege ist.

Ein weiteres Ausführungsbeispiel der Erfindung zeichnet sich dadurch aus, daß die Leitung an dem raumfesten Punkt bzw. am Anschlußkasten in Klemmen einmündet, die parallelachsig ausgerichtet sind.

Diese Maßnahme hat den Vorteil, daß die Leitung bereits im Bereich der Klemmen aufeinander zu weisend ausgerichtet sind, so daß auch insoweit nur minimale Verformungen beim Verschwenken des Tisches auftreten.

Eine besonders gute Wirkung wird dann erzielt, wenn der raumfeste Punkt sich auf einem das Gehäuse überspannenden Portalrahmen befindet.

Diese Maßnahme hat den Vorteil, daß für die Werkzeugmaschine ein an sich bekanntes, seitlich umlaufendes und damit geschlossenes Gehäuse verwendet werden kann, durch das sichergestellt ist, daß während des Bearbeitens des Werkstückes keine Kühlflüssigkeit und keine Späne in die Umgebung der Werkzeugmaschine fliegen. Derartige Gehäuse sind in der Regel nach oben offen ausgebildet, um Werkstücke auch von oben mittels eines Kranes auf den Werkstücktisch aufsetzen zu können, wenn dies gelegentlich aufgrund des besonderen Gewichtes oder der Abmessungen des Werkstückes erforderlich sein sollte. Der das Gehäuse überspannende Portalrahmen hat dabei den Vorteil, daß der raumfeste Punkt zum Anschließen der Leitungen an einer geeigneten Position oberhalb des Tisches in der Nähe der Verlängerung der Drehachse des Tisches fixiert werden kann. Er hat außerdem den Vorteil, daß bereits vorhandene Werkzeugmaschinen in einfacher Weise mit den beschriebenen Leitungen nachgerüstet werden können, indem der genannte Portalrahmen als Nachrüstteil auf das Gehäuse einer bereits vorhandenen Maschine aufgeschraubt wird.

Bei einer besonders bevorzugten Variante dieses Ausführungsbeispiels weist der Portalrahmen die Leitungen aufnehmende hohle Rahmenschenkel auf.

Diese Maßnahme hat den Vorteil, daß die Verbindungsleitungen für Signale und/oder Energie im Portalrahmen geschützt verlaufen.

Eine weitere Variante dieses Ausführungsbeispiels zeichnet sich dadurch aus, daß die lose nach unten hängende Leitung am Portalrahmen mittels der Klemme befestigt ist, daß die Klemme lösbar am Portalrahmen befestigt ist und daß von der Klemme eine weitere Leitung zu einem Steckerteil führt, das Teil einer am Portalrahmen angeordneten Steckverbindung ist.

Diese Maßnahme hat den Vorteil, daß die lose nach unten hängende Leitung leicht montiert und demontiert werden kann, weil die Verbindung zur festen Leitungsführung im Portalrahmen und am Gehäuse der Werkzeugmaschine zum zentralen Steuerkasten durch das lösbare Steckerteil leicht aufgetrennt werden kann.

Schließlich ist noch eine Ausführungsform dieser Variante bevorzugt, bei der der Portalrahmen oberhalb der Bestückungsseite angeordnet ist.

Diese Maßnahme hat den Vorteil, daß sowohl der Portalrahmen wie auch die lose nach unten hängenden Leitungen stets im Abstand von dem Spindelstock der Werkzeugmaschine angeordnet sind, so daß Kollisionen nicht zu befürchten sind, auch wenn der Spindelstock aufgrund seiner besonderen Bauweise von der Werkzeugachse aus gesehen noch etwas nach vorne zur Bestückungsseite hin ausladend ausgebildet ist.

Weitere Vorteile ergeben sich aus der Beschreibung und der beigefügten Zeichnung.

Ein Ausführungsbeispiel der Erfindung ist in der Zeichnung dargestellt und wird in der nachfolgenden Beschreibung näher erläutert. Es zeigen:

Fig. 1 ein Ausführungsbeispiel einer erfindungsgemäßen Werkzeugmaschine in Vorderansicht;

Fig. 2 das Ausführungsbeispiel gemäß Fig. 1 in Seitenansicht in Richtung der Pfeile II–II von Fig. 1;

Fig. 3 eine Draufsicht (vereinfacht) der Werkzeugmaschine gemäß Fig. 1 in Richtung der Pfeile III–III von Fig. 1.

In den Figuren bezeichnet 10 insgesamt eine Werkzeugmaschine, beispielsweise ein numerisch gesteuertes Bohr- und Fräszentrum. Die Werkzeugmaschine 10 ist mit einem unlaufenden, geschlossenen Gehäuse 11 versehen, in das Fenster 12 eingelassen sind. An der Vorderseite des Gehäuses 11 dort, wo der Benutzer der Werkzeugmaschine 10 steht, sind Schiebetüren 13 vorgesehen, die während des Bearbeitungsvorganges geschlossen werden können. Im Gehäuse 11 befindet sich ein horizontaler Werkstücktisch 14, dessen zum Benutzer gewandte Seite als Bestückungsseite 15 und dessen zum Spindelstock 20 weisende Seite als Bearbeitungsseite 16 bezeichnet wird. Die Bestückungsseite 15 ist von der Bearbeitungsseite 16 durch eine gedachte Trennlinie 23 getrennt.

Der Werkstücktisch 14 ist auf einer senkrechten Welle 17 montiert, die um eine vertikale Achse 18 verdrehbar ist. Auf dem Werkstücktisch 14 ist auf dessen Bestückungsseite 15 bzw. dessen Bearbeitungsseite 16 jeweils ein Teilapparat 19 bzw. 19a vorgesehen, in den ein in der Figure nicht gezeigtes Werkstück einspannbar ist.

Der Spindelstock 20 ist mit einem Werkzeug 21, beispielsweise einem Bohrer oder einem Fräser versehen und in mehreren Koordinatenachsen verfahrbar, wie mit einem Koordinatenkreuz 22 angedeutet.

Im Betrieb der Werkzeugmaschine 10 ist im Teilapparat 19a auf der Bearbeitungsseite 16 des Werkstücktisches 14 ein Werkstück angeordnet, das dort vom Werkzeug 21 unter numerischer Steuerung der Werkzeugmaschine 10 bearbeitet wird. Während dieser Bearbeitung kann ein Benutzer der Werkzeugmaschine 10 das zuvor bearbeitete Werkstück aus dem Teilapparat 19, der sich auf der Bestückungsseite 15 des Werkstücktischs 14 befindet, entnehmen und ein neues, noch unbearbeitetes Werkstück dort einsetzen.

Hat nun das Werkzeug 21 den Bearbeitungsvorgang beendet, so wird der Werkstücktisch 14 um 180° gedreht und das Spiel wiederholt sich von neuem.

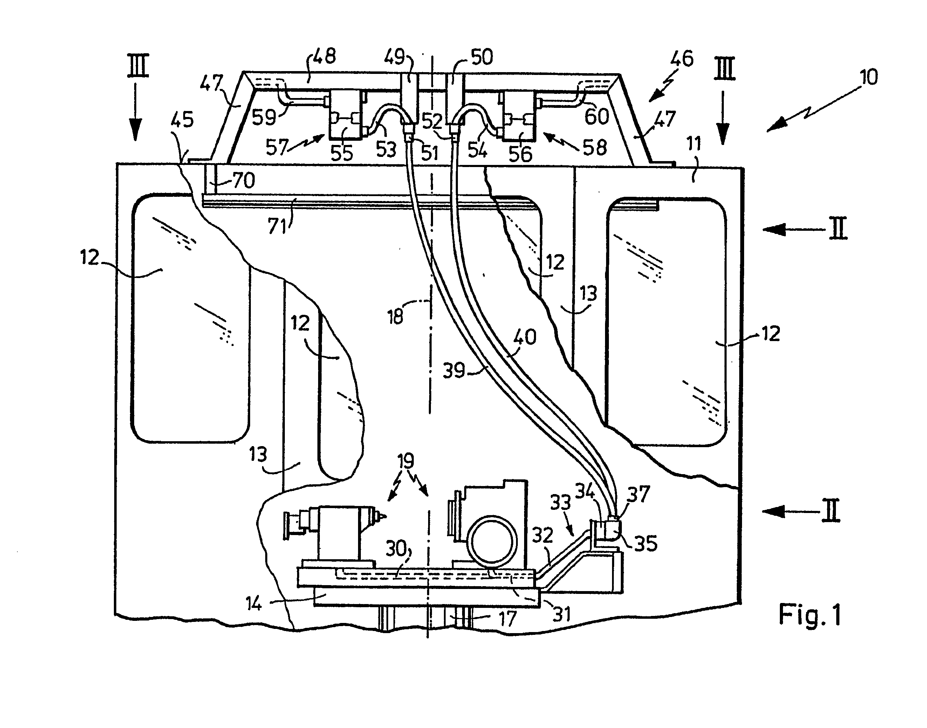

Um die Teilapparate 19, 19a einerseits mit Energie zu versorgen, andererseits aber auch Signale von oder zu den Teilapparaten 19, 19a zu führen, sind im Werkstücktisch 14 Kanäle 30, 31 vorgesehen, wie sie in Fig. 1 angedeutet sind. In die Kanäle 30, 31 sind eine erste Leitung 32 und eine zweite Leitung 33 gelegt, wobei nachfolgend unter "Leitung" jede Art von Verbindungsleitung verstanden werden soll, mit der elektrische Ströme, elektrische oder Fluid-Signale, Druckluft, Hydraulikflüssigkeit und dergleichen geführt werden können.

Die Leitungen 32, 33 sind zu einem Anschlußkasten 34 geführt, in den sie näherungsweise horizontal einmünden. Der Anschlußkasten 34 weist zwei Kniestücke 35, 36 auf, die mit zwei nach oben ausmündenden Klemmen 37, 38 versehen sind. An diesen nach oben weisenden Klemmen 37, 38 sind eine dritte Leitung 39 und eine vierte Leitung 40 angeschlossen, die in weitem Bogen zur Oberseite 45 des Gehäuses 11 hin geführt sind.

Die Oberseite 45 des Gehäuses 11 überspannt ein Portalrahmen 46, der zwei schräge Rahmenschenkel 47 und einen diese verbindenden waagerechten Rahmenschenkel 48 aufweist. In der Mitte des waagerechten Rahmenschenkels 48 sind zwei nach unten weisende Laschen 49, 50 lösbar befestigt. Die Laschen 49, 50 tragen an ihrer Unterseite zwei nach unten weisende Klemmen 51, 52, in die die Leitungen 39, 40 von unten einmünden.

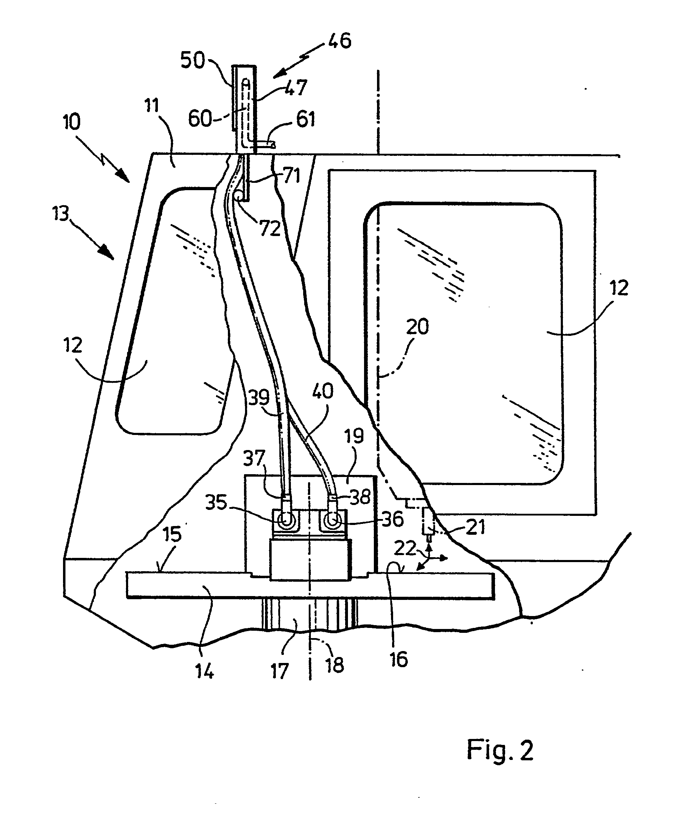

Von den Klemmen 51, 52 führen eine fünfte Leitung 53 und eine sechste Leitung 54 zu jeweils einem Steckerteil 55 bzw. 56, die Teile einer lösbaren Steckverbindung 57 bzw. 58 sind. Von diesen Steckverbindungen 57, 58 führen wiederum eine siebte Leitung 59 bzw. eine achte Leitung 60 in das Innere der hohl ausgebildeten Rahmenschenkel 47, 48. Von dort treten die Leitungen aus, wie mit einer neunten Leitung 61 in Fig. 2 angedeutet, um zu einem Steuerungskasten der Werkzeugmaschine 10 zu führen.

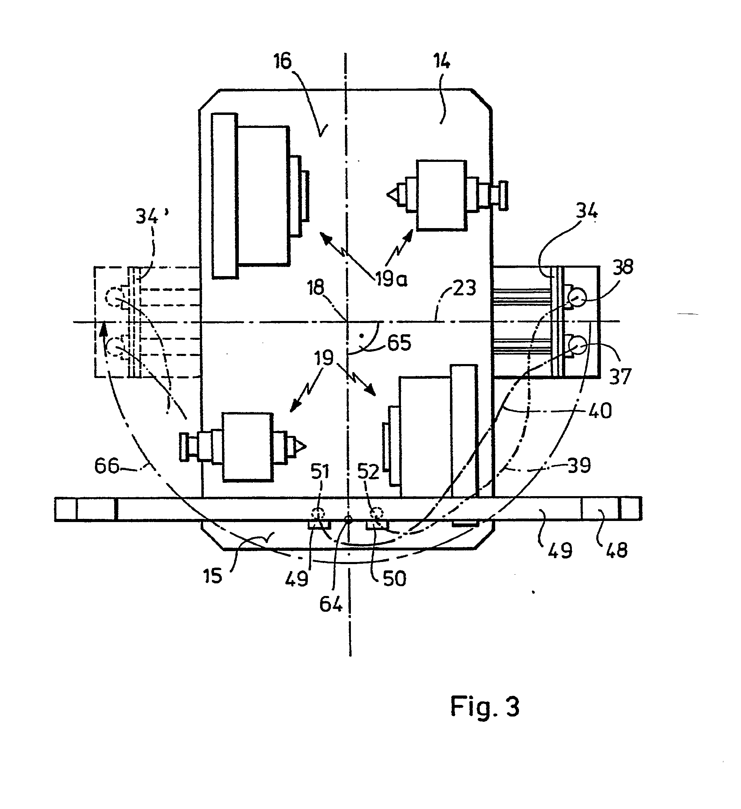

Aus der Draufsicht gemäß Fig. 3 erkennt man, daß die Laschen 49, 50 als Befestigungspunkte der Leitungen 39, 40 zu einem Symmetriepunkt 64 symmetrisch angeordnet sind, der unter einem rechten Winkel 65 zur Trennlinie 23 bzw. dem darauf angeordneten Anschlußkasten 34 angeordnet ist.

In Fig. 3 ist mit 34 der Anschlußkasten in einer ersten Position eingezeichnet und mit 66 ist ein zum Spindelstock 20 sich öffnender Halbkreis angedeutet, entlang dem der Anschlußkasten 34 geführt ist, wenn er zusammen mit dem Werkstücktisch 14 verschwenkt wird, um dann die in Fig. 3 gestrichelt eingezeichnete Position 34' einzunehmen.

Schließlich kann, wie in den Fig. 1 und 2 zu erkennen ist, noch unterhalb des waagerechten Rahmenschenkels 48 und parallel zu diesem ein Rohr 72 an Streben 70, 71 abgehängt sein, um die Leitungen 39, 40 beim Verschwenken des Werkstücktisches 14 sicher außerhalb des Arbeitsbereiches des Spindelstocks 20 zu halten.

Man erkennt aus Fig. 2 auch deutlich, daß der Portalrahmen 46 gegenüber der Achse 18 nach vorne in einen Bereich oberhalb der Bestückungsseite 15 versetzt angeordnet ist, auch dies eine Maßnahme, um sicherzustellen, daß die Spindelstock 20 so weit als möglich nach vorne verfahren werden kann, ohne mit dem Leitungssystem in Kollision zu geraten.

**Patentansprüche**

1. Werkzeugmaschine (10) mit einem in mehreren Koordinatenachsen verfahrbaren Spindelstock (20), mit einem Werkstücktisch (14), der um eine zu seiner Oberfläche senkrechte Achse (18) derart abwechselnd gegenläufig um einen Winkel von 180° verdrehbar ist, daß jeweils eine Hälfte der Oberfläche des Werkstücktisches (14) abwechselnd eine Bearbeitungsseite (16) im Arbeitsbereich des Spindelstocks (20) und eine Bestückungsseite (15) im Abstand vom Arbeitsbereich des Spindelstocks (20) bildet, wobei mindestens eine Leitung (32, 33, 39, 40, 53, 54, 59, 60) für Signale und/oder Energie von einem raumfesten Teil der Werkzeugmaschine (10) zum Werkstücktisch (14) geführt ist, dadurch gekennzeichnet, daß die Leitung (39, 40) oberhalb des Werkstücktisches (14) an einem Befestigungspunkt (49, 51/50, 52) an dem raumfesten Teil der Werkzeugmaschine (10) angeschlossen und lose nach unten hängend mit einem Anschlußkasten (34) des Werkstücktisches (14) verbunden, ist, wobei der Befestigungspunkt (49, 51/50, 52) und der Anschlußkasten (34) gegenüber der Achse (18) beabstandet und gegeneinander um etwa einen rechten Winkel (65) versetzt angeordnet sind, wenn der Anschlußkasten (34, 34') seine Winkelendlage einnimmt.

2. Werkzeugmaschine nach Anspruch 1, dadurch gekennzeichnet, daß mehrere Leitungen (39, 40) an mehreren, zu einem um einen rechten Winkel (65) gegenüber dem Anschlußkasten (34, 34') in seinen Winkelendlagen versetzten Punkt (64) symmetrisch angeordneten Befestigungspunkten (49, 51/50, 52) an dem raumfesten Teil der Werkzeugmaschine (10) angeschlossen sind.

3. Werkzeugmaschine nach einem der Ansprüche 1 bis 2, dadurch gekennzeichnet, daß der Anschlußkasten (34) auf der Trennlinie (23) zwischen Bearbeitungsseite (16) und Bestückungsseite (15) angeordnet ist und beim Verdrehen entlang einer Bewegungsbahn etwa in Form eines zum Spindelstock (20) geöffneten Halbkreises (66) geführt ist.

4. Werkzeugmaschine nach einem der Ansprüche 1 bis 3, dadurch gekennzeichnet, daß die Leitung (39, 40) an dem raumfesten Punkt bzw. am Anschlußkasten (34) in Klemmen (37, 38, 51, 52) einmündet, die parallelachsig ausgerichtet sind.

5. Werkzeugmaschine nach einem der Ansprüche 1 bis 4, dadurch gekennzeichnet, daß der raumfeste Punkt sich auf einem das Gehäuse (11) überspannenden Portalrahmen (46) befindet.

6. Werkzeugmaschine nach Anspruch 5, dadurch gekennzeichnet, daß der Portalrahmen (46) die Leitungen (58, 59) aufnehmende hohle Rahmenschenkel (47, 48) aufweist.

7. Werkzeugmaschine nach Anspruch 5 oder 6, dadurch gekennzeichnet, daß die lose nach unten hängende Leitung (39, 40) am Portalrahmen (46) mittels der Klemme (51, 52) befestigt ist, daß die Klemme (51, 52) lösbar am Portalrahmen (46) befestigt ist und daß von der Klemme (51, 52) eine weitere Leitung (53, 54) zu einem Steckerteil (55, 56) führt, das Teil einer am Portalrahmen (46) angeordneten Steckverbindung (55, 56) ist.

8. Werkzeugmaschine nach einem der Ansprüche 5 bis 7, dadurch gekennzeichnet, daß der Portalrahmen (46) oberhalb der Bestückungsseite (15) angeordnet ist.

**Revendications**

1. Machine-outil (10) dotée d'une poupée (20) qui peut être déplacée le long de plusieurs axes de coordonnées, d'une table porte-pièce (14) qui peut effectuer, alternativement dans un sens et dans l'autre, une rotation de 180° autour d'un axe (18) perpendiculaire à sa surface, de telle manière qu'à chaque fois une moitié de la surface de la table porte-pièce (14) constitue alternativement un côté d'usinage (16) dans la zone de travail de la poupée (20) et un côté de chargement (15) à distance de la zone de travail de la poupée (20); machine-outil dans laquelle au moins une canalisation (32, 33, 39, 40, 53, 54, 59, 60) servant à la transmission des signaux et/ou de l'énergie est installée entre une partie fixe de la machine-outil (10) et la table porte-outils (14); machine-outil caractérisée en ce que la canalisation (39, 40) est raccordée au-dessus de la table porte-pièce (14) à un point de fixation (49, 51/50, 52) situé sur la partie fixe de la machine-outil (10) et est reliée librement vers le bas à une boîte de raccordement (34) de la table porte-pièce (14), le point de fixation (49, 51/50, 52) et la boîte de raccordement (34) étant disposés à distance par rapport à l'axe (18) et formant approximativement un angle droit (65), lorsque la boîte de raccordement (34, 34') prend sa position angulaire finale.

2. Machine-outil selon la revendication 1, caractérisée en ce que plusieurs canalisations (39, 40) sont raccordées à plusieurs points de fixation (49, 51/50, 52) situés sur la partie fixe de la machine-outil (10) et disposés symétriquement par rapport à un point (64) qui forme un angle droit (65) avec la boîte de raccordement (34, 34') dans sa position angulaire finale.

3. Machine-outil selon l'une des revendications 1 à 2, caractérisée en ce que la boîte de raccordement (34) est disposée sur la ligne de séparation (23) entre le côté d'usinage (16) et le côté de chargement (15) et se déplace lors de la rotation, le long d'une trajectoire de déplacement qui affecte approximativement la forme d'un demicercle (66) ouvert vers la poupée (20).

4. Machine-outil selon l'une des revendications 1 à 3, caractérisée en ce que la canalisation (39, 40) débouche, au niveau d'un point fixe ou de la boîte de raccordement (34), dans des raccords (37, 38, 51, 52) parallèles.

5. Machine-outil selon l'une des revendications 1 à 4, caractérisée en ce que le point fixe se trouve sur un portique (46) qui enjambe le carter (11).

6. Machine-outil selon la revendication 5, caractérisée en ce que les jambes (47, 48) du portique (46) sont creuses et logent les canalisations (58, 59).

7. Machine-outil selon la revendication 5 ou 6, caractérisée en ce que la canalisation (39, 40) qui pend librement vers le bas est fixée au portique (46) au moyen du raccord (51, 52), en ce que le raccord (51, 52) peut être détaché du portique (46) et en ce qu'une autre canalisation (53, 54) relie le raccord (51, 52) à une pièce enfichable (55, 56), qui fait partie d'une connexion mâle/femelle (55, 56), située au niveau du portique (46).

8. Machine-outil selon l'une des revendications 5 à 7, caractérisée en ce que le portique (46) est disposé au-dessus du côté de chargement (15).

**Claims**

1. A machine tool (10) comprising a spindle stock (20) being displaceable along several coordinate directions, further comprising a workpiece table (14) being alternately and reciprocally rotatable, by an angle of 180°, about an axis (18) extending vertically with respect to its surface, such that one half each of the workpiece table (14) surface alternately forms a processing side (16) within the operating area of the spindle stock (20), or a mounting side (15) distant from the spindle stock (20) operating area, wherein at least one line (32, 33, 39, 40, 53, 54, 59, 60) carrying signals and/or energy are guided from a stationary part of the machine tool (10) to the workpiece table (14), characterized in that the line (39, 40) is connected to an attachment point (49, 51/50, 52) at the stationary part of the machine tool (10) above the workpiece table (14), and is further connected, hanging loosely downwardly, with a connection box (34) of the workpiece table (14), with the attachment point (49, 51/50, 52) and the connection box (34) being distant relative to the axis (18) and with respect to each other by an angle (65) of 90°, when the connection box (34, 34') is in its angular end position.

2. The machine tool of claim 1, characterized in that several lines (39, 40) are attached to several attachment points (49, 51/50, 52) on the stationary part of the machine tool, the attachment points (49, 51/50, 52) being arranged symmetrically to a point (64) being offset by an angle (65) of 90° with respect to the connection box (34, 34') in its angular end positions.

3. The machine tool of claim 1 or 2, characterized in that the connection box (34) is arranged on the parting line (23) between the processing side (16) and the mounting side (15) and, during rotation, is guided along a path of movement exhibiting approximately the shape of a semicircle (66).

4. The machine tool of any of claims 1 through 3, characterized in that the line (39, 40) ends at the stationary point and the connection box (34) respectively, in connectors (37, 38, 51, 52) the access of which are aligned parallel to each other.

5. The machine tool of any of claims 1 through 4, characterized in that the stationary point is situated on a portal frame (46) spanning the housing (11).

6. The machine tool of claim 5, characterized in that the portal frame (46) is provided with hollow frame pieces (47, 48) accommodating the lines (58, 59).

7. The machine tool of claim 5 or 6, characterized in that the lines (39, 40) hanging loosely downwardly, are attached to the portal frame (46) by means of the connector (51, 52), the connector (51, 52) being attached detachably on the portal frame (46) and that a further line (53, 54) is guided from the connector (51, 52) to a plug element (55, 56) being part of a plug-and-socket connector (55, 56) arranged on the portal frame.

8. The machine tool of any of claims 5 to 7, characterized in that the portal frame (46) is arranged above the mounting side (15).

Fig.1

EP 0 249 845 B1

EP 0 249 845 B1

Fig. 2

Fig. 3